# EUROPÄISCHE PATENTSCHRIFT

(11) **EP 1 526 338 B1**
(45) Veröffentlichungstag und Bekanntmachung des Hinweises auf die Patenterteilung: **11.04.2012**
(21) Anmeldenummer: 04024760.3
(22) Anmeldetag: 18.10.2004
(51) Int. Cl.: F24D 12/02, F24D 3/08, F24D 19/10, F24H 8/00

(54) **Wärmeversorgungsanlage mit mindestens zwei Wärmeerzeugern für eine Heizungsanlage und Verfahren zur verbrauchsabhängigen Steuerung der Wärmeerzeuger**
Heat supply unit with at least two heat generators and method for controlling the heat generators depending on the consumption
Circuit d'alimentation de chauffage avec au moins deux générateurs de chaleur et procédé pour la commande des générateurs de chaleur en fonction de la consommation

(30) Priorität: 20.10.2003 DE 10349258; 09.08.2004 DE 102004038768
(43) Veröffentlichungstag der Anmeldung: 27.04.2005
(73) Patentinhaber: Vertrieb und Grosshandel von Heizungs-, Sanitär- und Elektroerzeugnissen, 13055 Berlin (DE)
(72) Erfinder: Schramm, Bruno, Dipl.-Ing., 15537 Grünheide (DE); Lang, Jürgen, Dipl.-Ing., 12557 Berlin (DE)
(74) Vertreter: Burghardt, Dieter

(56) Entgegenhaltungen:
- CH-A- 274 468
- DE-A1- 2 721 301

## Beschreibung

Die Erfindung betrifft eine mit mindestens zwei Wärmeerzeugern ausgerüstete Wärmeversorgungsanlage zur Wärmeenergiebereitstellung für eine nachgeordnete Heizungsanlage und für eine Einrichtung zur Warmwassererzeugung aus Trinkwasser und ein Verfahren zur verbrauchsabhängigen und wirtschaftlichen Steuerung der Betriebszustände der Wärmeerzeuger.

Nach der DE 548 199 C sind Wärmeversorgungsanlagen zur Wärmeenergiebereitstellung für eine nachgeordnete Heizungsanlage und für eine Einrichtung zur Warmwassererzeugung aus Trinkwasser bekannt. Bei den bekannten Anlagen sind mindestens zwei im Parallelbetrieb angeordnete Wärmeerzeuger eingesetzt. Die parallel liegenden Wärmeerzeuger sind im Vorlauf mit einem Heizkreisverteiler verbunden, von dem aus jeweils die Verbraucher gespeist werden; und die Rücklaufleitungen der Verbraucher sind mit einem Rücklaufsammler verbunden, der mit den Rücklaufleitungen zu den parallel angeordneten Wärmeerzeugern in Verbindung steht. Zur Einstellung der erforderlichen Vorlauftemperatur ist jeder der Wärmeerzeuger mit einer von der Außentemperatur gesteuerten Reglereinheit ausgerüstet.

Weiterhin sind Wärmeversorgungsanlagen zur Wärmeenergiebereitstellung für eine nachgeordnete Heizungsanlage und für eine Einrichtung zur Warmwassererzeugung aus Trinkwasser bekannt, die mit zwei in Reihe geschalteten Wärmeerzeugern, bestehend aus einem Brennwertkessel und einem Niedertemperatur-Heizkessel, ausgerüstet sind. Diese Kesselfolgeschaltung ist last- und zeitabhängig geregelt. Wird der Sollwert der Vorlauftemperatur unterschritten, wird der als Führungskessel vorgesehene Brennwertkessel in Betrieb genommen. Solange der Folgekessel außer Betrieb ist, ist dieser durch ein motorbetätigtes Absperrorgan hydraulisch von der Anlage getrennt. Bei entsprechendem Wärmebedarf wird mit Zuschaltung des Folgekessels das motorbetätigte Absperrorgan automatisch geöffnet. Bei abnehmender Belastung laufen die Schaltvorgänge sinngemäß umgekehrt ab. Die in Reihe liegenden Wärmeerzeuger sind im Vorlauf mit einem Heizkreisverteiler verbunden, von dem aus jeweils die Verbraucher gespeist werden; und die Rücklaufleitungen der Verbraucher sind mit einem Rücklaufsammler verbunden, der mit den Rücklaufleitungen zu den in Reihe angeordneten Wärmeerzeugern in Verbindung steht.

Der Bestimmung der erforderlichen Vorlauftemperatur liegen theoretisch ermittelte Heizungskurven zugrunde, die nicht dem wirklichen Wärmeenergiebedarf der Verbraucher entsprechen. Obgleich die Wärmeerzeuger für sich einen hohen technischen Standard hinsichtlich des Wirkungsgrades aufweisen, werden diese Vorteile bei parallel betriebenen Wärmeerzeugern in nachgeschalteten Anlagen für Heizung und Trinkwassererwärmung nicht genutzt. Ursache hierfür ist einerseits, daß die Wärmeerzeuger getrennt, d.h. unabhängig von dem wirklichen Energiebedarf der Verbraucher geregelt werden. Weiterhin lassen sich die im Parallelbetrieb arbeitenden oder in Reihe geschalteten Wärmeerzeuger nicht im optimalen Auslegungsbereich betreiben. Die Verbraucherkreise werden jeweils als getrennte hydraulische Kreise betrieben und damit wird die Rücklauftemperatur zum als Führungskessel ausgebildeten Brennwertkessel nicht kontrolliert soweit abgesenkt, daß die Vorteile des Brennwertkessels genutzt werden können.

Nach der CH 274 468 A ist eine zentrale Warmwasserheizungsanlage mit mindestens zwei in Reihe liegenden Heizungskesseln bekannt. Diese Anordnung von zwei Heizungskesseln dient dem Ziel eine größere Anlage wirtschaftlich zu betreiben, wobei die Heizungskessel in Reihe liegen und durch Umgehungsleitungen vom Heizungsnetz getrennt werden können.

Ziel der Erfindung ist die Senkung der Energiekosten beim Betreiben einer mit mindestens zwei Wärmeerzeugern ausgerüsteten Wärmeversorgungsanlage für die Wärmeenergiebereitstellung für eine nachgeordnete Heizungsanlage und für die Versorgung einer nachgeordneten Einrichtung zur Warmwassererzeugung aus Trinkwasser und damit gleichzeitig die Erhöhung des Jahresnutzungsgrades der eingesetzten Wärmeerzeuger.

Der Erfindung liegt die Aufgabe zugrunde, eine mit mindestens zwei Wärmeerzeugern ausgestattete Wärmeversorgungsanlage für die Wärmeenergiebereitstellung für eine nachgeordnete Heizungsanlage und für die Versorgung einer nachgeordneten Einrichtung zur Warmwassererzeugung aus Trinkwasser und ein Verfahren zum wirtschaftlichen Betreiben eines dem Niedertemperaturkessel vorgeschalteten Brennwertkessels der Wärmeversorgungsanlage sowohl im Winter- und Sommerbetrieb als auch im stark schwankenden Energiebedarfsfall zu entwickeln.

Ein Ausführungsbeispiel der Erfindung soll nachfolgend näher erläutert werden. Die zugehörigen Zeichnungen zeigen:
- Fig. 1: eine mit zwei Wärmeerzeugern ausgestattete Wärmeversorgungsanlage für Heizung und Warm- wassererzeugung aus Trinkwasser, dargestellt an dem Versorgungsfall Winter,
- Fig. 2: eine mit zwei Wärmeerzeugern ausgestattete Wärmeversorgungsanlage für Heizung und Warm- wassererzeugung aus Trinkwasser, dargestellt an dem Versorgungsfall Sommer,

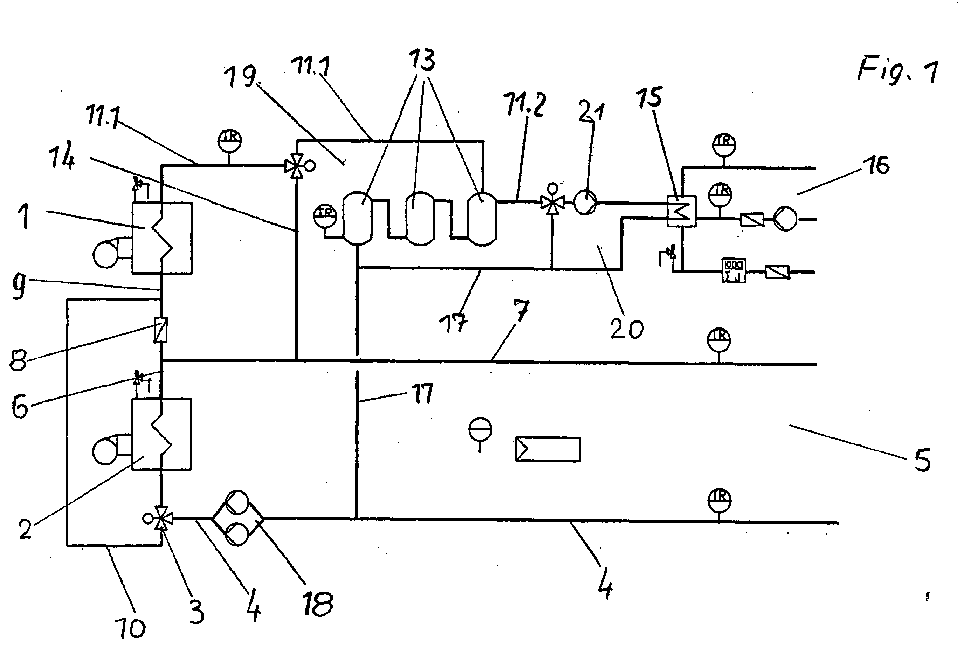

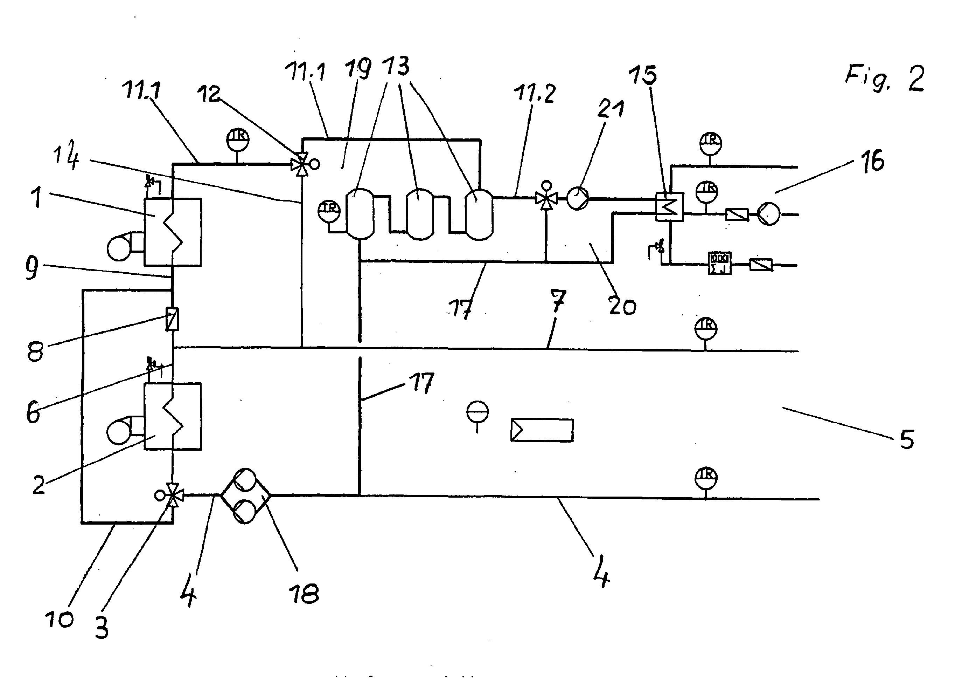

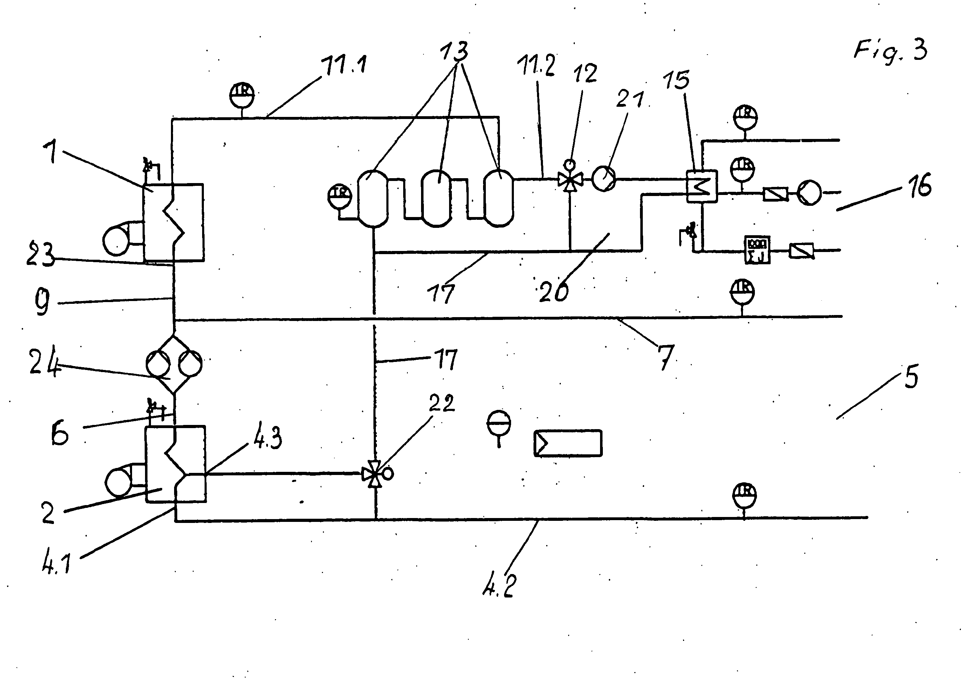

Eine Wärmeversorgungsanlage weist zwei in Reihe geschaltete Wärmeerzeuger 1; 2 auf, wobei der zweite Wärmeerzeuger 1 aus einem Niedertemperaturkessel besteht, der einem aus einem Brennwertkessel bestehenden erste Wärmeerzeuger 2 nachgeordnet ist. Nach den Ausführungen gemäß Fig.1 und 2 ist der erste Wärmeerzeuger 2 über ein Umschaltventil 3 einerseits mit dem Heizungsrücklauf 4 eines Heizkreises 5 einer nicht dargestellten Heizungsanlage und andererseits über eine Vorlaufleitung 6 sowohl mit einem Vorlauf 7 des Heizkreises 5 als auch über ein Rückschlagventil 8 durch eine Verbundleitung 9 zwischen dem zweiten Wärmeerzeuger 1 und dem ersten Wärmeerzeuger 2 verbunden. Der erste Wärmeerzeuger 2 ist außerdem mit einer Überbrückungsleitung 10 versehen. Diese ist einerseits mit dem im Heizungsrücklauf liegenden Umschaltventil 3 und andererseits mit der Verbundleitung 9 verbunden, wobei die Einbindung der Überbrückungsleitung 10 hinter dem Rückschlagventil 8 in die Verbundleitung 9 erfolgt. Der erste Wärmeerzeuger 2 ist auf einen definierten Verbrauchswert, d.h. ohne Reservekapazität ausgelegt und wird so geregelt, daß ständig, d.h. bis auf seltene Betriebszustände, die Kesselabgase des als Brennwertkessel ausgebildeten ersten Wärmeerzeugers 2 unterhalb der Kondensationstemperatur des Wassers abgekühlt werden können, wodurch die latente Wärme des Wasserdampfes ausgenutzt werden kann.

Der Rücklauf des zweiten Wärmeerzeugers 1 ist mit der Überbrückungsleitung 10 und der Vorlauf des Wärmeerzeugers 1 ist mit einer Vorlaufleitung 11.1 verbunden. Die Vorlaufleitung 11.1 ist einerseits über ein Dreiwegeventil 12 mit einer Wärmespeichereinrichtung, die mindestens aus einem Wärmespeicher 13 besteht und andererseits über dieses Dreiwegeventil 12 und eine Speiseleitung 14 mit dem Vorlauf 7 der Heizungskreises 5 verbunden. Sofern die Wärmespeichereinrichtung aus mehreren einzelnen Wärmespeichern 13 besteht, sind diese in Reihe geschaltet miteinander verbunden. Die vorgesehenen Wärmespeicher 13 werden außerhalb der Spitzenlast aufgeladen und dienen als Wärmepuffer in Spitzenlastetappen. Der zur Trinkwassererwärmung dienende Wärmeaustauscher 15 einer Einrichtung 16 zur Warmwasserbereitung aus Trinkwasser ist mit einer Vorlaufleitung 11.2 verbunden, wobei die Wärmespeicher 13 über die Vorlaufleitung 11.1 aufgeladen werden und über die Vorlaufleitung 11.2 des Wärmeaustauschers 15 entweder über die Wärmespeicher 13 oder direkt über den zweiten Wärmeerzeuger 1 mit Wärmeenergie versorgt werden.

Ein Rücklauf 17 des Wärmeaustauschers 15 ist sowohl mit dem Heizungsrücklauf 4 als auch mit der Wärmespeichereinrichtung verbunden, wobei dieser Rücklauf 17 mit den in Reihe liegenden Wärmespeichern 13 an der der Einspeisung durch die Vorlaufleitung 11.1 abgewandten Seite verbunden ist. Über den Rücklauf 17 wird eine Rücklaufabsenkung des in dem Heizkreis zum ersten Wärmeerzeuger 2 rückströmenden Wärmeträgermediums be-wirkt. Hierdurch wird erreicht, daß im Brennwertkessel die erforderliche Abgasrückkühlung eintritt.

Im Winterbetrieb ist die Überbrückungsleitung 10 geschlossen und der zweite Wärmeerzeuger 1 und erste Wärmeerzeuger 2 arbeiten in der Reihenschaltung. Im Sommerbetrieb ist der erste Wärmeerzeuger 2 durch die Überbrückungsleitung umströmt und außer Betrieb. Die aus dem zweiten.Wärmeerzeuger 1 und dem ersten Wärmeerzeuger 2 bestehende Wärmeversorgungsanlage ist mit einer Förderpumpe 18 im Heizungsrücklauf 4 zum Betreiben des Heizkreises 5 und des Speicherladekreises 19 ausgerüstet. Im Entladekreis 20 des Wärmetauschers 15 zur Trinkwassererwärmung ist eine im Vorlauf 11.2 angeordnete Förderpumpe 21 vorgesehen.

Mit der erfindungsgemäß ausgebildeten Wärmeversorgungsanlage nach Fig. 1 und 2 wird es ermöglicht, den als Brennwertkessel ausgebildeten Wärmeerzeuger 2 mit dem vollen Brennwerteffekt, d.h. bei einer Vorlauftemperatur von 60° C und einer Rücklauftemperatur von 55° C zu betreiben. Hierzu wird erfindungsgemäß eine Absenkung der Rücklauftemperatur im Rücklauf 4 zum ersten Wärmeerzeuger 2 durch Zumischung einer definierten Rate eines von durch Wärmeentzug in einem Wärmeaustauscher 15 in einer Einrichtung 16 zur Warmwasserbereitung abgekühlten Wärmeträgermediums vorgenommen. Gleichzeitig wird im Bedarfsfall eine Anhebung der Vorlauftemperatur im Vorlauf 7 der Heizungsanlage nach dem ersten Wärmeerzeuger 2 vorgenommen. Hierzu wird der dem ersten Wärmeerzeuger 2 nachgeordnete zweite Wärmeerzeuger 1 zur Abdeckung der Spitzenbelastung neben der Funktion der Aufladung der Wärmespeichereinrichtung eingesetzt. Die Aufladung der Wärmespeichereinrichtung erfolgt ausschließlich außerhalb der Spitzenbelastung. Hierdurch wird gleichzeitig erreicht, daß ein Betreiben der Wärmeversorgungsanlage mit wenigen Aussetzzeiten vorgenommen werden kann.

Der Vorteil der erfindungsgemäß gestalteten Wärmeversorgungsanlage nach Fig. 1 und 2 besteht darin, daß nur eine Förderpumpe vorhanden ist und gesteuert werden muß; für den Heizkreis 5 ist kein getrennter Regelkreis erforderlich und durch die dosierte Rücklauf-Abkühlung durch ein Speichermanagement ist es möglich, den ersten Wärmeerzeuger 2 vorlaufseitig immer auf Sollwerttemperatur zu betreiben. Durch diese Rücklauf-Abkühlung ist es möglich, einen verbesserten Jahreswirkungsgrad für den zweiten Wärmeerzeuger 1 und für den ersten Wärmeerzeuger 2 zu erreichen. Außerdem wird durch Reihenschaltung der Wärmeerzeuger erreicht, daß der zweite Wärmeerzeuger 1 über einen vorgewärmten Rücklauf verfügt.

Da die Vorlauftemperatur nach dem ersten Wärmeerzeuger 2 im Niedertemperaturbereich liegt, ergibt sich ein weiterer Vorteil. Dieser liegt darin, daß problemlos ein Niedertemperaturheizkreis z.B. für eine Fußbodenheizung dem Heizkreis 5 zugeordnet werden kann.

Vorlaufseitig ist der zweite Wärmeerzeugers 1 über die Vorlaufleitung 11.1 mit der Wärmespeichereinrichtung 13, die mindestens aus einem Wärmespeicher 13 besteht, verbunden. Sofern die Wärmespeichereinrichtung 13 aus mehreren einzelnen Wärmespeichern 13 besteht, sind diese in Reihe geschaltet.

Die vorgesehenen Wärmespeicher 13 werden außerhalb der Spitzenlast aufgeladen und dienen als Wärmepuffer in Spitzenlastetappen. Eine Vorlaufleitung 11.2 verbindet auch hier die Wärmespeichereinrichtung 13 mit dem der Trinkwassererwärmung dienenden Wärmeaustauscher 15 einer Einrichtung 16 zur Warmwasserbereitung aus Trinkwasser.

Die Aufladung der Wärmespeichereinrichtung erfolgt ausschließlich außerhalb der Spitzenbelastungszeiten. Hierdurch wird gleichzeitig erreicht, daß ein Betreiben der Wärmeversorgungsanlage mit wenigen Aussetzzeiten vorgenommen werden kann.

### Aufstellung der verwendeten Bezugszeichen

- 1: Wärmeerzeuger
- 2: Wärmeerzeuger
- 3: Umschaltventil
- 4: Kesselrücklauf
- 4.1: Kesselrücklauf
- 4.2: Kesselrücklauf
- 4.3: Kesselrücklauf
- 5: Heizkreis
- 6: Vorlaufleitung
- 7: Vorlauf Heizungsanlage
- 8: Rücklaufleitung
- 9: Verbundleitung
- 10: Überbrückungsleitung
- 11.1: Vorlaufleitung
- 11.2: Vorlaufleitung
- 12: Dreiwegeventil
- 13: Wärmespeicher
- 14: Speiseleitung
- 14: Vorlaufleitung
- 15: Wärmetauscher
- 16: Einrichtung WWS
- 16: Vorlaufanschluß
- 17: Rücklauf
- 18: Förderpumpe
- 19: Speicherladekreis
- 20: Entladekreis
- 21: Förderpumpe
- 22: Dreiwegeventil
- 23: Rücklaufeinspeisung
- 24: Förderpumpe
- 25: Rücklauf
- 26: Rücklauf

## Patentansprüche

1. Wärmeversorgungsanlage mit mindestens zwei Wärmeerzeugern für eine Heizungsanlage und mit einer Einrichtung zur Warmwassererzeugung, wobei von zwei in Reihe liegenden Wärmeerzeugern (1; 2) ein erster Wärmeerzeuger (2) als Grundlastträger und ein dem ersten Wärmeerzeuger (2) nachgeordneter zweiter Wärmeerzeuger (1) als ein der Aufladung einer Wärmespeichereinrichtung in der Einrichtung (16) zur Warmwassererzeugung dienender Ergänzungslastträger ausgebildet ist und für die zwei in Reihe liegenden Wärmeerzeuger (1; 2) ein gemeinsamer Heizungsrücklauf (4) aus einem Heizkreis (5) und aus einem Entladekreis (20) eines in der Einrichtung (16) zur Warmwassererzeugung angeordneten Wärmeaustauschers (15) und aus einer der Anhebung der Vorlauftemperatur dienenden Vorlaufeinspeisung (14) aus dem zweiten Wärmeerzeuger (1) in den Vorlauf (7) des Heizkreises (5) und aus der mindestens aus einem Wärmespeicher (13) bestehenden Wärmespeichereinrichtung ist, vorgesehen, wobei der erste Wärmeerzeuger über eine Vorlaufleitung (6) des ersten Wärmeerzeugers (2) sowohl mit dem Vorlauf (7) des Heizkreises (5) als auch über ein Rückschlagventil (8) mit einer Verbundleitung (9) zum zweiten Wärmeerzeuger (1) verbunden ist, und wobei die Wärmespeichereinrichtung mit einer Vorlaufleitung (11.1) des zweiten Wärmeerzeugers (1) und rücklaufseitig mit dem gemeinsamen Rücklauf (4) aus dem Heizungskreis (5) und aus dem Entladekreis (20) zur Warmwassererzeuger zum ersten Wärmeerzeuger (2) verbunden ist.

2. Wärmeversorgungsanlage nach Anspruch 1, **dadurch gekennzeichnet, daß** der erste Wärmeerzeuger (2) aus einem Brennwertkessel und der zweite Wärmeerzeuger (1) aus einem Niedertemperaturkessel besteht.

3. Wärmeversorgungsanlage nach Anspruch 1, **dadurch gekennzeichnet, daß** der erste Wärmeerzeuger (2) mit einer absperrbaren Umgehungsleitung (10) versehen ist.

4. Wärmeversorgungsanlage nach Anspruch 1, **dadurch gekennzeichnet, daß** zwei sich einstellende Temperaturebenen im Vorlauf (7) des Heizkreises (5) nach der Vorlaufeinspeisung über eine Speiseleitung (14) aus dem zweiten Wärmeerzeuger (1) vorgesehen sind.

5. Wärmeversorgungsanlage nach Anspruch 1, **dadurch gekennzeichnet, daß** für den Heizkreis (5) und für einen Ladekreislauf (19) für die Aufladung der Wärmeenergiespeicher (13) eine gemeinsame Förderpumpe (18) im Heizungsrücklauf (4) zum ersten Wärmeerzeuger (2) vorgesehen ist.

6. Verfahren zum Betreiben der Wärmeversorgungsanlage mit den mindestens zwei in Reihe liegenden Wärmeerzeugern nach Anspruch 1, wobei zur Erhöhung der Vorlauftemperatur des die Grundlast abdeckenden ersten Wärmeerzeugers (2) im Vorlauf (7) zur Wärmeversorgung der Heizungsanlage eine Rate eines die Grundlast abdeckenden ersten Wärmeerzeuger (2) nachgeordneten zweiten Wärmeerzeugers (1) auf eine erhöhte Vorlauftemperatur erwarmeten Wärmetragermediums zugeführt wird, und zur Abkühlung des Wärmeübertragungsmediums im Rücklauf (4) des Heizkreises (5) zu dem mit dem zweiten Wärmeerzeuger (1) in Reihe liegenden ersten Wärmeerzeuger (2), eine Rücklauf-Abkühlung durch eine Zumischung einer definierten Rate eines Wärmeübertragungsmediums aus dem Entladekreis (20) der Einrichtung (16) zur Warmwassererzeugung erfolgt, wobei zuvor ein Wärmeenergieentzug des Wärmeübertragungsmediums in dem Wärmeaustauscher (15) in dem Entladekreis (20) der Einrichtung (16) zur Warmwassererzeugung vorgenommen wird.

7. Verfahren nach Anspruch 6, **dadurch gekennzeichnet, daß** der der Grundlastversorgung dienende ersten Wärmeerzeuger (2) als Brennwertkessel ständig unter den Bedingungen zur Aufrechterhaltung des Brennwerteffektes betrieben wird und über den dem Brennwertkessel als ersten Wärmeerzeuger (2) nachgeordneten zweiten Wärmeerzeuger (1) die Spitzenbelastungen aus der Wärmeversorgungsanlage ausgeglichen werden.

8. Verfahren nach Anspruch 6 bis 7, **dadurch gekennzeichnet, daß** die aus dem Wärmespeicher (13) bestehende Wärmespeichereinrichtung aufgeladen wird und mit dieser gespeicherten Wärmeenergie die Einrichtung (16) zur Warmwasserbereitung betrieben wird und der zweite Wärmeerzeuger (1) ausschließlich der Abdeckung des Wärmebedarfs bei der Aufladung des Wärmespeichers (13) und zur Abdeckung des Wärmebedarfs im Spitzenlastfall eingesetzt wird.

## Claims

1. A heat supply system comprising at least two heat generators for a heating system and for a facility to produce hot water, wherein of the two heat generators (1; 2) arranged in series, one heat generator (2) is designed as a base load carrier and one heat generator (1) arranged downstream of the heat generator (2) is designed as a supplementary load carrier for regenerating a heat storage facility in the facility (16) for producing hot water and wherein provision is made for a common heating return (4) for the two heat generators (1; 2) arranged in series, from a heating circuit (5) and a discharge circuit (20) of a heat exchanger (15) arranged in the facility (16) for producing hot water, and for a heat storage facility consisting of at least one of the heat storage units (13) for raising the flow temperature of the flow in-feed (14) from the heat generator (1) into the flow (7) of the heating circuit (5), wherein the first heat generator is connected, via a flow line (6) of the first heat generator (2), both with the flow (7) of the heating circuit (5) and, via a return valve (8), with an interconnecting line (9) to the second heat generator (1), and wherein the heat storage facility is connected with a flow line (11.1) of the heat generator (1) and, on the return side, with a common return (4) from the heating system and the hot water generator to the heat generator (2).

2. Heat supply system according to claim 1, **characterised in that** the first heat generator (2) consists of a condensing boiler and the second heat generator (1) consists of a low-temperature boiler.

3. Heat supply system according to claim 1, **characterised in that** the first heat generator (2) is provided with a bypass line (10), which can be shut-off.

4. Heat supply system according to claim 1, **characterised in that** two self-adjusting temperature levels are provided in the flow (7) of the heating circuit (5) downstream of the in-feed of the flow via a feed line (14) from the second heat generator (1).

5. Heat supply system according to claim 1, **characterised in that** a common feed pump (18) is provided in the heating return (4) to the first heat generator (2) for the heating circuit (5) and for a regenerating circuit (19) for regenerating the heat energy storage units (13).

6. A method for operating the heat supply system with at least two heat generators arranged in series according to claim 1, wherein in order to increase the flow temperature of the first heat generator (2) supplying the base load, a percentage of the heated heat carrier medium of the second heat generator (1) arranged downstream of the first heat generators (2) is introduced into the flow (7) for supplying the heating system with heat, which carrier medium is heated to an increased flow temperature, and, in order to cool the heat transfer medium in the return (4) of the heating circuit (5) to the first heat generator (2) arranged in series with the second heat generator (1), a return cooling takes place by adding a defined percentage of a heat transfer medium from the discharge circuit (20) of the facility (16) for producing hot water, wherein heat energy was previously withdrawn from the heat transfer medium in the heat exchanger (15) in the discharge circuit (20) of the facility (16) for producing hot water.

7. Method according to claim 6, **characterised in that** the first heat generator (2) for supplying the base load is operated constantly as a condensing boiler under the conditions for maintaining the condensing effect and **in that** the peak loads from the heat supply system are compensated for via the second heat generator (1) arranged downstream of the condensing boiler as the first heat generator (2).

8. Method according to claims 6 and 7, **characterised in that** the heat storage facility consisting of the heat storage unit (13) is regenerated and **in that** this stored heat energy is used to operate the facility (16) for producing hot water and **in that** the second heat generator (1) is used exclusively for covering the heat demand during regeneration of the heat storage unit (13) and for covering the heat demand in case of peak loads.

## Revendications

1. Installation d'alimentation en chaleur comportant au moins deux générateurs de chaleur pour une installation de chauffage et pour un dispositif de génération d'eau chaude, dans laquelle parmi deux générateurs de chaleur (1 ; 2) disposés en série un générateur de chaleur (2) est réalisé comme un vecteur de charge de base et un générateur de chaleur (1) subordonné au générateur de chaleur (2) est réalisé comme un vecteur de charge complémentaire servant à charger un dispositif d'accumulateur de chaleur dans le dispositif (16) de génération d'eau chaude et pour les deux générateurs de chaleur (1 ; 2) disposés en série, un retour de chauffage commun (4) constitué d'un circuit de chauffage (5) et d'un circuit de décharge (20) d'un échangeur thermique (15) disposé dans le dispositif (16) de génération d'eau chaude et une alimentation de départ (14) servant à hausser la température de départ constituée du générateur de chaleur (1) dans le départ (7) du circuit de chauffage (5) et d'au moins un dispositif d'accumulation de chaleur constituant l'accumulateur de chaleur (13) sont prévus, dans lequel par l'intermédiaire d'une conduite de départ (6) du premier générateur de chaleur (2) le premier générateur de chaleur est relié tant au départ (7) du circuit de chauffage (5) que également par l'intermédiaire d'une soupape de retenue (8) avec une conduite de liaison (9) au deuxième générateur de chaleur (1) et dans lequel le dispositif d'accumulation de chaleur est relié avec une conduite de départ (11.1) du générateur de chaleur (1) et du côté de retour avec le retour commun (4) du chauffage et du générateur d'eau chaude au générateur de chaleur (2).

2. Installation d'alimentation en chaleur selon la revendication 1, **caractérisée en ce que** le premier générateur de chaleur (2) est constitué d'une chaudière à condensation et le deuxième générateur de chaleur (1) est constitué d'une chaudière à basse température.

3. Installation d'alimentation en chaleur selon la revendication 1, **caractérisée en ce que** le premier générateur de chaleur (2) est pourvu d'une conduite de dérivation (10) verrouillable.

4. Installation d'alimentation en chaleur selon la revendication 1, **caractérisée en ce que** deux niveaux de températures s'établissant dans le départ (7) du circuit de chauffage (5) sont prévus après l'alimentation de départ par l'intermédiaire d'une conduite d'alimentation (14) provenant du deuxième générateur de chaleur (1).

5. Installation d'alimentation en chaleur selon la revendication 1, **caractérisée en ce que** pour le circuit de chauffage (5) et pour un circuit de charge (19) pour charger l'accumulateur d'énergie thermique (13), une pompe de transport commune (18) dans le retour de chauffage (4) vers le premier générateur de chaleur (2) est prévue.

6. Procédé d'exploitation de l'installation d'alimentation en chaleur comportant au moins deux générateurs de chaleur disposés en série selon la revendication 1, dans lequel pour augmenter la température de départ du premier générateur de chaleur (2) couvrant la charge de base dans le départ (7) pour alimenter en chaleur l'installation de chauffage, un taux d'un deuxième générateur de chaleur (1) subordonné au premier générateur de chaleur (2) couvrant la charge de base est alimenté sur un milieu caloporteur chauffé à une température de départ accrue, et pour refroidir le milieu caloporteur dans le retour (4) du circuit de chauffage (5) vers le premier générateur de chaleur (2) disposé en série avec le deuxième générateur de chaleur (1), un refroidissement de retour a lieu par l'intermédiaire d'un mélange d'un taux défini d'un milieu de transmission de chaleur provenant du circuit de décharge (20) du dispositif (16) de génération d'eau chaude, dans lequel préalablement une extraction d'énergie thermique du milieu de transmission de chaleur dans l'échangeur thermique (15) dans le circuit de décharge (20) du dispositif (16) de génération d'eau chaude est entreprise.

7. Procédé selon la revendication 6, **caractérisé en ce que** le premier générateur de chaleur (2) servant à l'alimentation de charge de base est constamment exploité comme une chaudière à condensation dans les conditions de conservation de l'effet de condensation et par l'intermédiaire du deuxième générateur de chaleur (1) subordonné à la chaudière à condensation comme premier générateur de chaleur (2), les pics de charge de l'installation d'alimentation en chaleur sont harmonisés.

8. Procédé selon les revendications 6 à 7, **caractérisé en ce que** le dispositif d'accumulation d'énergie constitué de l'accumulateur d'énergie (13) est chargé et avec cette énergie thermique accumulée le dispositif (16) de préparation d'eau chaude est exploité et le deuxième générateur de chaleur (1) est employé exclusivement pour couvrir le besoin en chaleur lors de la charge de l'accumulateur de chaleur (13) et pour couvrir le besoin en chaleur dans des cas de pic de charge.
